# EUROPÄISCHE PATENTSCHRIFT

(11) **EP 3 130 757 B1**
(45) Veröffentlichungstag und Bekanntmachung des Hinweises auf die Patenterteilung: **04.07.2018**
(21) Anmeldenummer: 15180677.5
(22) Anmeldetag: 12.08.2015
(51) Int. Cl.: F01D 5/34, F01D 5/16, F01D 25/06, F01D 11/00, F16J 15/02, F01D 25/24

(54) **BESCHAUFELTER GASTURBINENROTOR**
BLADED GAS TURBINE ROTOR
ROTOR DE TURBINE À GAZ À AUBAGE

(43) Veröffentlichungstag der Anmeldung: 15.02.2017
(73) Patentinhaber: MTU Aero Engines AG, 80995 München (DE)
(72) Erfinder: Dr. Hartung, Andreas, 81829 München (DE)

(56) Entgegenhaltungen:
- EP-A1- 2 806 105
- EP-A2- 2 014 872
- DE-A1-102013 214 932
- US-A- 1 833 754

## Beschreibung

Die Arbeiten, die zu dieser Erfindung geführt haben, wurden gemäß der Finanzhilfevereinbarung Nr. CSJU-GAM-SAGE-2008-001 im Zuge des Siebten Rahmenprogramms der Europäischen Union (FP7/2007-2013) für Clean Sky Joint Technology Initiative gefördert.

Die vorliegende Erfindung betrifft einen beschaufelten Rotor für eine Gasturbine, eine Gasturbine, insbesondere Flugtriebwerk-Gasturbine, mit wenigstens einem solchen beschaufelten Rotor, sowie ein Verfahren zum Herstellen des beschaufelten Rotors.

Aus der EP 2 806 105 A1 oder der US 1 833 754 ist eine Turbomaschinenschaufel mit einem Impulskörper bekannt, der mit Bewegungsspiel in einer Stoßkammer in einem Schaufelblatt oder Schaufelfuß angeordnet ist. Die Stoßkammer kann entweder durch einen verschweißten Deckel oder einen Rotor der Turbomaschine verschlossen sein.

Eine Aufgabe einer Ausführung der vorliegenden Erfindung ist es, eine Gasturbine und/oder deren Herstellung zu verbessern.

Diese Aufgabe wird durch einen beschaufelten Rotor mit den Merkmalen des Anspruchs 1, 3 oder 8 bzw. ein Verfahren mit den Merkmalen des Anspruchs 9 oder 11 gelöst. Vorteilhafte Ausführungsformen der Erfindung sind Gegenstand der Unteransprüche.

Nach einem Aspekt der vorliegenden Erfindung weist ein beschaufelter Rotor für eine Gasturbine, insbesondere eine Flugtriebwerk-Gasturbine, insbesondere ein beschaufelter Rotor für einen Verdichter oder eine Turbine der Gasturbine, insbesondere ein beschaufelter Rotor einer Gasturbine, insbesondere einer Flugtriebwerk-Gasturbine, insbesondere ein beschaufelter Rotor eines Verdichters und/oder ein beschaufelter Rotor einer Turbine der Gasturbine, einen Grundkörper und mehrere Laufschaufeln auf, wobei Kontaktbereiche einer Mantelfläche des Grundkörpers und Stirnflächen der Laufschaufeln stoffschlüssig miteinander verbunden sind bzw. werden und einer oder mehrere dieser Kontaktbereiche und/oder eine oder mehrere dieser Stirnflächen (jeweils) ein oder mehrere Sacklöcher aufweisen, in dem jeweils ein oder mehrere Impulskörper mit Bewegungsspiel angeordnet sind bzw. vor der Verbindung der jeweiligen Laufschaufel und Kontaktbereich miteinander angeordnet werden, und das zusätzlich zu der Verbindung der Laufschaufeln mit der Mantelfläche verschlossen ist bzw. nach dem Anordnen des bzw. der Impulskörper und vor der Verbindung der jeweiligen Laufschaufel und Kontaktbereich miteinander verschlossen wird.

Die Sacklöcher sind bzw. werden zwar bereits durch die Verbindung der Laufschaufeln mit der Mantelfläche verschlossen. Durch das zusätzliche Verschließen von Sacklöchern können jedoch vorteilhaftere Stoßbedingungen der Impulskörper in den Sacklöchern realisiert und/oder die anschließende Verbindung der Schaufeln mit dem Grundkörper verbessert werden.

In einer Ausführung sind bzw. werden die Kontaktbereiche und Stirnflächen durch Schweißen, insbesondere Reibschweißen, miteinander verbunden. Hierdurch kann eine, insbesondere fertigungs- und/oder festigungstechnisch, vorteilhafte Verbindung geschaffen werden.

Die Mantelfläche ist in einer Ausführung eine radial äußere Mantelfläche, die Stirnflächen der Laufschaufeln entsprechend insbesondere radial inneren Stirnflächen, bezogen jeweils auf eine Dreh- bzw. Hauptachse des Rotors.

Nach einem weiteren Aspekt der vorliegenden Erfindung weist ein beschaufelter Rotor für eine Gasturbine, insbesondere eine Flugtriebwerk-Gasturbine, insbesondere ein beschaufelter Rotor für einen Verdichter oder eine Turbine der Gasturbine, insbesondere ein beschaufelter Rotor einer Gasturbine, insbesondere einer Flugtriebwerk-Gasturbine, insbesondere ein beschaufelter Rotor eines Verdichters und/oder ein beschaufelter Rotor einer Turbine der Gasturbine, einen Grundkörper und mehrere Laufschaufeln auf, wobei Grundkörper und Laufschaufeln spanend, insbesondere durch Fräsen, integral miteinander hergestellt sind bzw. werden und ein oder mehrere Sacklöcher sich von einer schaufelabgewandten Innenfläche des Grundkörpers aus zu einer der Laufschaufel (hin) erstreckt bzw. ein oder mehrere Sacklöcher hergestellt werden, das bzw. die sich (jeweils) von einer schaufelabgewandten Innenfläche des Grundkörpers aus zu einer der Laufschaufel (hin) erstreckt bzw. erstrecken, insbesondere zu einem Übergangsbereich bzw. radial inneren Schaufelfuß der Laufschaufel, wobei in dem bzw. den Sacklöchern (jeweils) ein oder mehrere Impulskörper mit Bewegungsspiel angeordnet sind bzw. nach der Herstellung des jeweiligen Sacklochs angeordnet werden, und das bzw. die verschlossen ist bzw. sind bzw. nach dem Anordnen des bzw. der jeweiligen Impulskörper verschlossen wird bzw. werden.

Durch das Einführen des bzw. der Impulskörper von einer schaufelabgewandten Innenfläche des Grundkörpers aus wird vorteilhaft ein Strömungskanal, der durch eine radial äußere Mantelfläche des Grundkörpers definierter ist, von der aus sich die Laufschaufeln nach radial außen erstrecken, nicht gestört, wobei zugleich durch die Erstreckung des Sacklochs zu einer Laufschaufel hin diese Laufschaufel vorteilhaft verstimmt werden kann.

Die schaufelabgewandte Innenfläche kann in einer Ausführung eine radial innere (bezogen auf eine Dreh- bzw. Hauptachse des Rotors) Mantelfläche und/oder Stirnfläche des Grundkörpers aufweisen, insbesondere sein.

In einer Ausführung ist ein Grund bzw. Boden eines Sacklochs in Axial- und Umfangsrichtung (bezogen auf eine Dreh- bzw. Hauptachse des Rotors) unterhalb einer Laufschaufel, insbesondere ihres Fußprofils bzw. -schnittes, angeordnet. In Radialrichtung (wiederum bezogen auf eine Dreh- bzw. Hauptachse des Rotors) kann der Grund bzw. Boden des Sacklochs unterhalb, oberhalb oder, wenigstens im Wesentlichen, auf Höhe des Fußprofils bzw. -schnittes der Laufschaufel bzw. ihrem radial inneren Ende ihrer Vorder- bzw. Hinterkante angeordnet sein. Hierdurch kann die Laufschaufel besonders vorteilhaft verstimmt werden.

Nach beiden Aspekten ist der beschaufelte Rotor somit jeweils eine sogenannte BLISK, d.h. ein Rotor mit integrierten Laufschaufeln, wobei Grundkörper und Laufschaufeln stoffschlüssig, insbesondere durch Schweißen, insbesondere Reibschweißen, miteinander verbunden oder spanend integral miteinander hergestellt sind bzw. werden.

Nach beiden Aspekten kann ein in der EP 2 806 105 A1 eingehender erläutertes Konzept realisiert werden, nach dem Schwingungsmoden von Schaufeln im Wesentlichen nicht dissipativ gedämpft, sondern durch Stoßkontakte der Impulskörper verstimmt und so unerwünschte Schwingungen der Schaufeln reduziert werden können. Diesbezüglich wird ergänzend auf die EP 2 806 105 A1 Bezug genommen und deren Inhalt in die vorliegende Offenbarung einbezogen.

Es hat sich überraschend gezeigt, dass bei solchen BLISKs durch das Konzept der Verstimmung durch Impulskörper, die Stöße ausführen, besonders vorteilhaft Schwingungsprobleme reduziert werden können.

Der Grundkörper kann insbesondere, wenigstens im Wesentlichen, ringartig sein, insbesondere als in Umfangsrichtung geschlossener Ring ausgebildet sein. Mehrere solche ringartige Rotoren können dann zu einem Verdichter oder einer Turbine der Gasturbine zusammengesetzt sein bzw. werden.

Ein Sackloch bezeichnet vorliegend insbesondere eine Aussparung bzw. geschlossene bzw. nicht durchgehende Bohrung, die sich von einer Oberfläche aus in das Material, insbesondere den Grundkörper bzw. die Laufschaufel, erstreckt und auf der der Oberfläche gegenüberliegenden S(tirns)eite geschlossen ist bzw. das Material nicht vollständig durchgreift. Es kann in einer Ausführung spanend, insbesondere durch Bohren, hergestellt oder mit dem Grundkörper bzw. der Laufschaufel urgeformt sein bzw. werden.

Ein Impulskörper kann in einem Sackloch ein Bewegungsspiel in Umfangs-, Radial- und/oder Axialrichtung, bezogen jeweils auf eine Dreh- bzw. Hauptachse des Rotors und/oder eine Längs- bzw. Erstreckungsrichtung des Sacklochs bzw. der Bohrung, aufweisen. In einer Ausführung beträgt das Bewegungsspiel in wenigstens einer dieser Richtungen wenigstens 10 µm, insbesondere wenigstens 0,05 mm, insbesondere wenigstens 0,5 mm, und/oder höchstens 1,5 mm, insbesondere höchstens 1,2 mm, insbesondere höchstens 0,8 mm.

Nach einer Ausführung sind bzw. werden ein oder mehrere der Sacklöcher stoffschlüssig, insbesondere durch Schweißen, verschlossen. Nach einer Ausführung sind bzw. werden ein oder mehrere der Sacklöcher durch einen separaten Deckel verschlossen. Hierdurch kann jeweils ein, insbesondere in Hinblick auf die beabsichtigte Stoßdynamik, vorteilhafter Verschluss realisiert werden.

Der Deckel kann das Sackloch form- und/oder reibschlüssig, insbesondere mittels Presspassung, verschließen. Zusätzlich oder alternativ kann er das Sackloch stoffschlüssig verschließen, insbesondere durch Schweißen. In einer Ausführung ist bzw. wird der Deckel in das Sackloch, insbesondere vollständig, eingeführt bzw. in diesem aufgenommen bzw. angeordnet, und in einer Weiterbildung mit bzw. in diesem verschweißt.

Nach einer Ausführung ist bzw. wird in einem oder mehreren der Sacklöcher jeweils genau ein bzw. ein einziger Impulskörper angeordnet. Hierdurch kann eine vorteilhafte Einzelstoßdynamik genutzt werden. Dabei können zur Verstimmung unterschiedlicher Schwingungsmoden Sacklöcher an mehreren Stellen angeordnet sein bzw. werden, die die gleichen oder unterschiedliche Abmessungen und/oder Impulskörper aufweisen, insbesondere die gleichen oder unterschiedliche Anzahlen von Impulskörpern und/oder Impulskörper mit den gleichen oder unterschiedlichen Abmessungen und/oder Gewichten.

Nach einer Ausführung sind bzw. werden ein oder mehrere der Impulskörper jeweils in einem radialen Bereich angeordnet, der sich von einem maximalen Außendurchmesser des Grundkörpers radial um maximal 10% einer radialen Schaufelhöhe der Laufschaufeln nach radial innen und/oder außen erstreckt, bezogen jeweils auf eine Dreh- bzw. Hauptachse des Rotors. Überraschenderweise hat sich gezeigt, dass eine Anordnung von Impulskörpern in diesem radialen Bereich bei BLISKs besonders vorteilhaft unerwünschte Schwingungen reduzieren kann.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen beschaufelten Rotor nach einer Ausführung der vorliegenden Erfindung in einem Axialschnitt;
- Fig. 2: Schritte eines Verfahrens zum Herstellen des Rotors nach einer Ausführung der vorliegenden Erfindung; und
- Fig. 3: einen beschaufelten Rotor nach einer weiteren Ausführung der vorliegenden Erfindung in einem Axialschnitt.

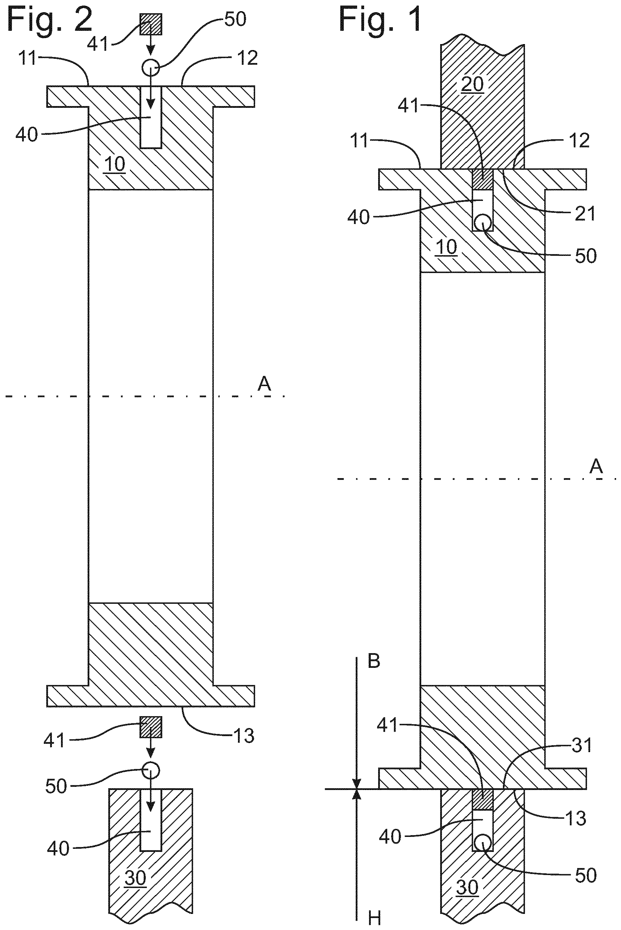

Fig. 1 zeigt einen beschaufelten Rotor in Form einer BLISK eines Verdichters oder einer Turbine einer Flugtriebwerk-Gasturbine nach einer Ausführung der vorliegenden Erfindung in einem Axialschnitt längs einer Dreh- bzw. Hauptachse A der Gasturbine bzw. des Rotors.

Die BLISK weist einen ringartigen Grundkörper 10 und mehrere Laufschaufeln 20, 30 auf, wobei Kontaktbereiche 12, 13 einer radial äußeren (bezogen auf die Dreh- bzw. Hauptachse A) Mantelfläche 11 des Grundkörpers 10 und Stirnflächen 21, 31 der Laufschaufeln 20, 30 durch Reibschweißen stoffschlüssig miteinander verbunden sind bzw. werden, wie durch die Figurenfolge Fig. 2 → Fig. 1 angedeutet.

Exemplarisch weist der Kontaktbereiche 12 und die Stirnfläche 31 jeweils ein Sackloch 40 auf, in dem jeweils ein Impulskörper 50 mit Bewegungsspiel angeordnet ist (vgl. Fig. 1) bzw. vor der Verbindung der jeweiligen Laufschaufel 20, 30 und Kontaktbereich 12, 13 miteinander angeordnet wird, wie durch die Figurenfolge Fig. 2 → Fig. 1 und Montagepfeile in Fig. 2 angedeutet.

Zusätzlich zu der Verbindung der Laufschaufeln mit der Mantelfläche sind bzw. werden die Sacklöcher 40 nach dem Anordnen des jeweiligen Impulskörpers 50 in dem Sackloch 40 und vor der Verbindung der jeweiligen Laufschaufel 20, 30 und Kontaktbereich 12, 13 miteinander jeweils durch einen Deckel 41 verschlossen, wie durch die Figurenfolge Fig. 2 → Fig. 1 und Montagepfeile in Fig. 2 angedeutet.

Die Deckel 41 sind bzw. werden in den Sacklöchern 40 verschweißt und vollständig in diesen aufgenommen. Hierdurch sind bzw. werden die Sacklöcher stoffschlüssig durch Schweißen verschlossen.

Die Sacklöcher 40 sind zwar bereits durch die Verbindung der Laufschaufeln mit der Mantelfläche verschlossen. Durch das zusätzliche Verschließen von Sacklöchern können jedoch vorteilhaftere Stoßbedingungen der Impulskörper 50 in den Sacklöchern 40 realisiert und die anschließende Verbindung der Schaufeln 20, 30 mit dem Grundkörper 10 verbessert werden.

Es hat sich überraschend gezeigt, dass bei solchen BLISKs durch das Konzept der Verstimmung durch Impulskörper, die stochastische Stöße ausführen, besonders vorteilhaft Schwingungsprobleme reduziert werden können.

Wie in Fig. 1, 2 erkennbar, erstrecken sich die Sacklöcher bzw. geschlossene bzw. nicht durchgehende Bohrung 40 von einer Oberfläche aus in das Material des Grundkörpers 10 bzw. der Laufschaufel 30 und sind auf der dieser Oberfläche gegenüberliegenden Stirnseite geschlossen bzw. durchgreifen das Material nicht vollständig. Sie können spanend, insbesondere durch Bohren, hergestellt oder mit dem Grundkörper bzw. der Laufschaufel urgeformt sein bzw. werden.

Die Impulskörper 50 weisen in dem jeweiligen Sackloch 40 exemplarisch ein Bewegungsspiel in Radialrichtung, bezogen auf eine Längs- bzw. Erstreckungsrichtung des Sacklochs bzw. der Bohrung 40, auf.

Die Impulskörper 50 sind jeweils in einem radialen Bereich (vertikal in Fig. 1) angeordnet, der sich von einem maximalen Außendurchmesser B des Grundkörpers 10 radial um maximal 10% einer radialen Schaufelhöhe H der Laufschaufeln 20, 30 nach radial innen und außen erstreckt.

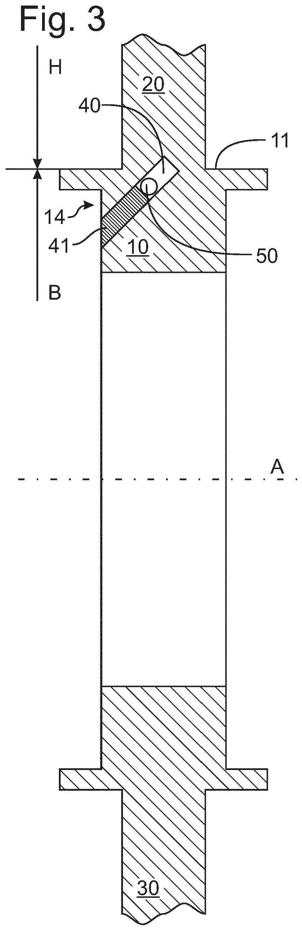

Fig. 3 zeigt einen beschaufelten Rotor in Form einer BLISK eines Verdichters oder einer Turbine einer Flugtriebwerk-Gasturbine nach einer weiteren Ausführung der vorliegenden Erfindung in Fig. 1 entsprechender Darstellung. Einander entsprechende Merkmale sind durch identische Bezugszeichen identifiziert, so dass auf die vorstehenden Ausführungen Bezug genommen und nachfolgend nur auf Unterschiede eingegangen wird.

Bei der BLISK der Fig. 3 sind bzw. werden Grundkörper 10 und Laufschaufeln 20, 30 gemeinsam aus dem Vollen gefräst und hierdurch integral miteinander hergestellt.

Anschließend werden ein oder mehrere Sacklöcher 40 spanend, insbesondere durch Bohren, hergestellt, die sich von einer schaufelabgewandten Innenfläche 14 des Grundkörpers 10 aus zu einer der Laufschaufel hin erstrecken, wobei in Fig. 3 exemplarisch ein Sackloch 40 gezeigt ist.

In den Sacklöchern 40 sind bzw. werden Impulskörper 50 angeordnet. Die Sacklöchern 40 sind bzw. werden durch die in ihnen verschweißten Deckel 41 verschlossen.

Durch das Einführen der Impulskörper 50 von der schaufelabgewandten Innenfläche 14 des Grundkörpers 10 aus wird vorteilhaft ein durch die gegenüberliegende radial äußere Mantelfläche 11 definierter Strömungskanal nicht gestört, wobei zugleich durch die Erstreckung der Sacklöcher 40 zu einer Laufschaufel hin diese Laufschaufel vorteilhaft verstimmt wird.

Ein Grund bzw. Boden des Sacklochs 40 ist in Axialrichtung (horizontal in Fig. 3) und Umfangsrichtung (senkrecht auf der Bildebene der Fig. 3) unterhalb der Laufschaufel 20, insbesondere ihres Fußprofils bzw. -schnittes, angeordnet. In Radialrichtung (vertikal in Fig. 3) ist der Grund bzw. Boden des Sacklochs 40 etwa auf Höhe des Fußprofils bzw. -schnittes der Laufschaufel 20 bzw. ihrem radial inneren Ende ihrer Vorder- bzw. Hinterkante angeordnet

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 10: Grundkörper
- 11: Mantelfläche
- 12, 13: Kontaktbereich
- 14: Innenfläche
- 20, 30: Laufschaufel
- 21, 31: Stirnfläche
- 40: Sackloch
- 41: Deckel
- 50: Impulskörper

- A: Rotordrehachse
- B: maximaler Außendurchmesser
- H: radiale Schaufelhöhe

## Patentansprüche

1. Beschaufelter Rotor für eine Gasturbine, mit einem Grundkörper (10) und mehreren Laufschaufeln (20, 30), wobei Kontaktbereiche (12, 13) einer Mantelfläche (11) des Grundkörpers und Stirnflächen (21, 31) der Laufschaufeln stoffschlüssig miteinander verbunden sind und wenigstens einer dieser Kontaktbereiche und/oder wenigstens eine dieser Stirnflächen wenigstens ein Sackloch (40) aufweisen, in dem wenigstens ein Impulskörper (50) mit Bewegungsspiel angeordnet und das zusätzlich zu der Verbindung der Laufschaufeln mit der Mantelfläche verschlossen (41) ist.

2. Beschaufelter Rotor nach dem vorhergehenden Anspruch, **dadurch gekennzeichnet, dass** die Kontaktbereiche und Stirnflächen durch Schweißen, insbesondere Reibschweißen, miteinander verbunden sind.

3. Beschaufelter Rotor für eine Gasturbine, mit einem Grundkörper (10) und mehreren Laufschaufeln (20, 30), wobei Grundkörper und Laufschaufeln spanend integral miteinander hergestellt sind und wenigstens ein Sackloch (40) sich von einer schaufelabgewandten Innenfläche (14) des Grundkörpers aus zu einer der Laufschaufel erstreckt, in dem wenigstens ein Impulskörper (50) mit Bewegungsspiel angeordnet und das verschlossen (41) ist.

4. Beschaufelter Rotor nach einem der vorhergehenden Ansprüche, **dadurch gekennzeichnet, dass** wenigstens eines der Sacklöcher stoffschlüssig, insbesondere durch Schweißen, verschlossen ist.

5. Beschaufelter Rotor nach einem der vorhergehenden Ansprüche, **dadurch gekennzeichnet, dass** wenigstens eines der Sacklöcher durch einen separaten Deckel (41) verschlossen ist.

6. Beschaufelter Rotor nach einem der vorhergehenden Ansprüche, **dadurch gekennzeichnet, dass** in wenigstens einem der Sacklöcher ein einziger Impulskörper angeordnet ist.

7. Beschaufelter Rotor nach einem der vorhergehenden Ansprüche, **dadurch gekennzeichnet, dass** wenigstens einer der Impulskörper in einem radialen Bereich angeordnet ist, der sich von einem maximalen Außendurchmesser (B) des Grundkörpers radial um maximal 10% einer radialen Schaufelhöhe (H) der Laufschaufeln nach radial innen und/oder außen erstreckt.

8. Gasturbine, insbesondere Flugtriebwerk- Gasturbine, mit wenigstens einem Verdichter, der einen beschaufelten Rotor nach einem der vorhergehenden Ansprüche aufweist, und/oder wenigstens einer Turbine, die einen beschaufelten Rotor nach einem der vorhergehenden Ansprüche aufweist.

9. Verfahren zum Herstellen eines beschaufelten Rotors für eine Gasturbine, mit einem Grundkörper (10) und mehreren Laufschaufeln (20, 30), wobei Kontaktbereiche (12, 13) einer Mantelfläche (11) des Grundkörpers und Stirnflächen (21, 31) der Laufschaufeln stoffschlüssig miteinander verbunden werden und wenigstens einer dieser Kontaktbereiche und/oder wenigstens eine dieser Stirnflächen wenigstens ein Sackloch (40) aufweisen, in dem zuvor wenigstens ein Impulskörper (50) mit Bewegungsspiel angeordnet und das nach diesem Anordnen und vor der Verbindung der jeweiligen Laufschaufel und Kontaktbereich miteinander verschlossen (41) wird.

10. Verfahren nach dem vorhergehenden Anspruch, **dadurch gekennzeichnet, dass** die Mantelfläche und Stirnflächen durch Schweißen, insbesondere Reibschweißen, miteinander verbunden werden.

11. Verfahren zum Herstellen eines beschaufelten Rotors für eine Gasturbine, mit einem Grundkörper (10) und mehreren Laufschaufeln (20, 30), wobei Grundkörper und Laufschaufeln spanend integral miteinander hergestellt werden und anschließend wenigstens ein Sackloch (40) hergestellt wird, das sich von einer schaufelabgewandten Innenfläche (14) des Grundkörpers aus zu einer der Laufschaufeln erstreckt, in das anschließend wenigstens ein Impulskörper (50) mit Bewegungsspiel angeordnet wird, und das anschließend verschlossen (41) wird.

12. Verfahren nach einem der vorhergehenden Ansprüche, **dadurch gekennzeichnet, dass** wenigstens eines der Sacklöcher stoffschlüssig, insbesondere durch Schweißen, verschlossen wird.

13. Verfahren nach einem der vorhergehenden Ansprüche, **dadurch gekennzeichnet, dass** wenigstens eines der Sacklöcher durch einen separaten Deckel (41) verschlossen wird.

14. Verfahren nach einem der vorhergehenden Ansprüche, **dadurch gekennzeichnet, dass** in wenigstens eines der Sacklöcher ein einziger Impulskörper angeordnet wird.

15. Verfahren nach einem der vorhergehenden Ansprüche, **dadurch gekennzeichnet, dass** wenigstens einer der Impulskörper in einem radialen Bereich angeordnet ist, der sich von einem maximalen Außendurchmesser (B) des Grundkörpers radial um maximal 10% einer radialen Schaufelhöhe (H) der Laufschaufeln nach radial innen und/oder außen erstreckt.

## Claims

1. Bladed rotor for a gas turbine, comprising a main body (10) and a plurality of rotor blades (20, 30), wherein contact regions (12, 13) of a lateral face (11) of the main body and end faces (21, 31) of the rotor blades are integrally bonded to one another and at least one of said contact regions and/or at least one of said end faces comprises at least one blind hole (40) in which at least one pulse body (50) having clearance of motion is arranged and which is sealed off (41), in addition to the rotor blades being connected to the lateral face.

2. Bladed rotor according to the preceding claim, **characterized in that** the contact regions and the end faces are interconnected by welding, in particular friction welding.

3. Bladed rotor for a gas turbine, comprising a main body (10) and a plurality of rotor blades (20, 30), wherein the main body and the rotor blades are produced by machining so as to be integral with one another and at least one blind hole (40) extends from an inner face (14) of the main body, which face is remote from the blade, to one of the rotor blades, in which hole at least one pulse body (50) having clearance of motion is arranged and which hole is sealed off (41).

4. Bladed rotor according to any of the preceding claims, **characterized in that** at least one of the blind holes is integrally sealed off, in particular by welding.

5. Bladed rotor according to any of the preceding claims, **characterized in that** at least one of the blind holes is sealed off by a separate cover (41).

6. Bladed rotor according to any of the preceding claims, **characterized in that** a single pulse body is arranged in at least one of the blind holes.

7. Bladed rotor according to any of the preceding claims, **characterized in that** at least one of the pulse bodies is arranged in a radial region that extends from a maximum external diameter (B) of the main body, radially by at most 10% of a radial blade height (H) of the rotor blades, radially inwards and/or radially outwards.

8. Gas turbine, in particular an aircraft engine gas turbine, comprising at least one compressor that has a bladed rotor according to any of the preceding claims, and/or at least one turbine that has a bladed rotor according to any of the preceding claims.

9. Method for producing a bladed rotor for a gas turbine, comprising a main body (10) and a plurality of rotor blades (20, 30), wherein contact regions (12, 13) of a lateral face (11) of the main body and end faces (21, 31) of the rotor blades are integrally bonded to one another and at least one of said contact regions and/or at least one of said end faces comprises at least one blind hole (40) in which at least one pulse body (50) having clearance of motion is already arranged and which, after said body has been arranged therein and before the rotor blade and the contact region are connected to one another in each case, is sealed off (41).

10. Method according to the preceding claim, **characterized in that** the lateral face and the end faces are interconnected by welding, in particular friction welding.

11. Method for producing a bladed rotor for a gas turbine, comprising a main body (10) and a plurality of rotor blades (20, 30), wherein the main body and the rotor blades are produced by machining so as to be integral with one another and subsequently at least one blind hole (40) is produced which extends from an inner face (14) of the main body, which face is remote from the blade, to one of the rotor blades, in which hole at least one pulse body (50) having clearance of motion is subsequently arranged, and which hole is subsequently sealed off (41).

12. Method according to any of the preceding claims, **characterized in that** at least one of the blind holes is integrally sealed off, in particular by welding.

13. Method according to any of the preceding claims, **characterized in that** at least one of the blind holes is sealed off by a separate cover (41).

14. Method according to any of the preceding claims, **characterized in that** a single pulse body is arranged in at least one of the blind holes.

15. Method according to any of the preceding claims, **characterized in that** at least one of the pulse bodies is arranged in a radial region that extends from a maximum external diameter (B) of the main body, radially by at most 10% of a radial blade height (H) of the rotor blades, radially inwards and/or radially outwards.

## Revendications

1. Rotor à aubes, destiné à une turbine à gaz, comprenant un corps de base (10) et une pluralité d'aubes directrices (20, 30), les zones de contact (12, 13) d'une surface d'enveloppe (11) du corps de base et des surfaces frontales (21, 31) des aubes directrices étant reliées les unes aux autres par liaison de matière et au moins une de ces zones de contact et/ou au moins une de ces surfaces frontales comportant au moins un trou borgne (40) dans lequel est disposé au moins un élément impulsionnel (50) présentant un jeu et qui est fermé en outre en plus de la liaison des aubes directrices avec la surface d'enveloppe (41).

2. Rotor à aubes selon la revendication précédente, **caractérisé en ce que** les zones de contact et les surfaces frontales sont reliées entre elles par soudage, notamment par soudage par friction.

3. Rotor à aubes, destiné à une turbine à gaz, comprenant un corps de base (10) et une pluralité d'aubes directrices (20, 30), le corps de base et les aubes directrices étant réalisés d'une seul pièce par usinage par enlèvement de copeaux et au moins un trou borgne (40) s'étendant depuis une surface intérieure (14), opposée aux aubes, du corps de base vers l'une des aubes directrices, lequel trou borgne contient au moins un élément impulsionnel (50) avec jeu et est fermé (41).

4. Rotor à aubes selon l'une des revendications précédentes, **caractérisé en ce qu'**au moins l'un des trous borgnes est fermé par liaison de matière, notamment par soudage.

5. Rotor à aubes selon l'une des revendications précédentes, **caractérisé en ce que** l'un au moins des trous borgnes est fermé par un couvercle séparé (41).

6. Rotor à aubes selon l'une des revendications précédentes, **caractérisé en ce qu'**un seul élément impulsionnel est disposé dans l'un au moins des trous borgnes.

7. Rotor à aubes selon l'une des revendications précédentes, **caractérisé en ce que** l'un au moins des éléments impulsionnels est disposé dans une région radiale qui s'étend radialement vers l'intérieur et/ou vers l'extérieur depuis un diamètre extérieur maximal (B) du corps de base radialement sur un maximum de 10 % de la hauteur radiale (H) de l'aube directrice.

8. Turbine à gaz, en particulier turbine à gaz de propulseur d'aéronef, comprenant au moins un compresseur qui comporte un rotor à aubes selon l'une des revendications précédentes, et/ou au moins une turbine qui comporte un rotor à aubes selon l'une des revendications précédentes.

9. Procédé de fabrication d'un rotor à aubes, destiné à une turbine à gaz, comprenant un corps de base (10) et une pluralité d'aubes directrices (20, 30), les zones de contact (12, 13) d'une surface d'enveloppe (11) du corps de base et les surfaces frontales (21, 31) des aubes directrices étant liées entre elles par liaison de matière et au moins une de ces zones de contact et/ou au moins une de ces surfaces frontales comportant au moins un trou borgne (40) dans lequel au moins un élément impulsionnel (50) est d'abord placé avec jeu et qui est fermé après cette mise en place et avant de relier ensemble (41) l'aube directrice et la zone de contact respectives.

10. Procédé selon la revendication précédente, **caractérisé en ce que** les surfaces d'enveloppe et les surfaces frontales sont reliées ensemble par soudage, notamment par soudage par friction.

11. Procédé de fabrication d'un rotor à aubes, destiné à une turbine à gaz, comprenant un corps de base (10) et une pluralité d'aubes directrices (20, 30), le corps de base et les aubes directrices étant réalisés d'une seule pièce par usinage par enlèvement de copeaux, puis au moins un trou borgne (40) étant réalisé qui s'étend depuis une surface intérieure (14), opposée aux aubes, du corps de base vers l'une des aubes directrices, lequel trou borgne reçoit ensuite avec jeu à l'intérieur au moins un élément impulsionnel (50) puis est fermé (41).

12. Procédé selon l'une des revendications précédentes, **caractérisé en ce que** l'un au moins des trous borgnes est fermé par liaison de matière, notamment par soudage.

13. Procédé selon l'une des revendications précédentes, **caractérisé en ce que** l'un au moins des trous borgnes est fermé par un couvercle séparé (41).

14. Procédé selon l'une des revendications précédentes, **caractérisé en ce qu'**un seul élément impulsionnel est disposé dans l'un au moins des trous borgnes.

15. Procédé selon l'une des revendications précédentes, **caractérisé en ce que** l'un au moins des éléments impulsionnels est disposé dans une région radiale qui s'étend radialement vers l'intérieur et/ou l'extérieur depuis un diamètre extérieur maximal (B) du corps de base radialement sur un maximum de 10 % de la hauteur radiale (H) des aubes directrices.
